# EUROPEAN PATENT SPECIFICATION

(11) **EP 0 771 722 B1**
(45) Date of publication and mention of the grant of the patent: **13.12.2000**
(21) Application number: 96116499.3
(22) Date of filing: 15.10.1996
(51) Int. Cl.: B63B 21/08, F16G 11/10

(54) **A cleat**
Seilklemme
Taquet coinceur

(30) Priority: 01.11.1995 GB 9522394
(43) Date of publication of application: 07.05.1997
(73) Proprietor: RWO (Marine Equipment) Ltd., Benfleet Essex SS7 4QW (GB)
(72) Inventor: Atkins, Stephen Roy, Pitsea, Basildon, Essex SS13 2AS (GB)
(74) Representative: Frankland, Nigel Howard

(56) References cited:
- FR-A- 347 281
- GB-A- 2 018 344

## Description

**THE PRESENT INVENTION** relates to a cleat and more particularly relates to a cam cleat.

It has been proposed previously to provide a cam cleat, and typical cam cleat comprises a base supporting two cam elements. The cam elements are each mounted for rotational movement about a vertical access. The adjacent parts of the cam elements define regions adapted to engage a rope passing between the cam elements. The cam teeth are located so that if the rope is moved in one direction the cam elements tend to move towards one another, providing a jamming effect, thus preventing movement in the rope in that direction. However, if the rope moves in the other direction the cams may rotate partially to release the rope.

Many different types of cam cleat of this type have been marketed previously. Typically the regions of the camming cleat adapted to engage the rope are provided with uniform serrations or "teeth", for example, as described in GB-A-2018344.

In an alternative cam cleat as shown in FR-A-347281 there is a single movable cam element which co-operates with a fixed surface. The cam element has teeth which are graded from a small pitch to a large pitch.

It has been found that an arrangement of these types may not provide an adequate grip on all the different types of rope which may be used with the cleat. The present invention seeks to provide an improved cam cleat.

According to this invention there is provided a cam cleat, to engage and retain a rope, the cam cleat comprising at least one moveable cam element having a portion defining a plurality of teeth adapted to engage the rope and means adapted to co-operate with said cam element so that the cam element can engage and retain the rope, the teeth on the cam element having at least one region where the teeth are relatively fine, being spaced apart on a relatively small pitch, and a further region where the teeth are spaced apart on a larger pitch, the teeth of fine pitch being provided on part of the cam that will engage a rope of smaller diameter and the said teeth that are spaced apart on a larger pitch being located on part of the cam that will engage a rope of a larger diameter, wherein the region of relatively fine teeth comprise a row of teeth, which are substantially linearly arranged.

Preferably the means adapted to co-operate with the cam element comprises another cam element which is a mirror-image thereof.

Preferably thefine teeth are of progressively reducing pitch and size.

In one embodiment the teeth of the further region are of gradually increasing depth and gradually increasing pitch with increasing distance fi-om the teeth of relatively fine pitch.

In another embodiment the teeth of the further region are of substantially uniform pitch and of substantially uniform depth.

In order that the invention may be more readily understood, and so that further features thereof may be appreciated, the invention will now be described, by way of example with reference to the accompanying drawing in which
FIGURE 1 is a perspective view of a cam cleat in accordance with the invention,
FIGURE 2 is a view of one of the cams of the cam cleat of figure 1, and
FIGURE 3 is a top plan view of the cam of figure 2

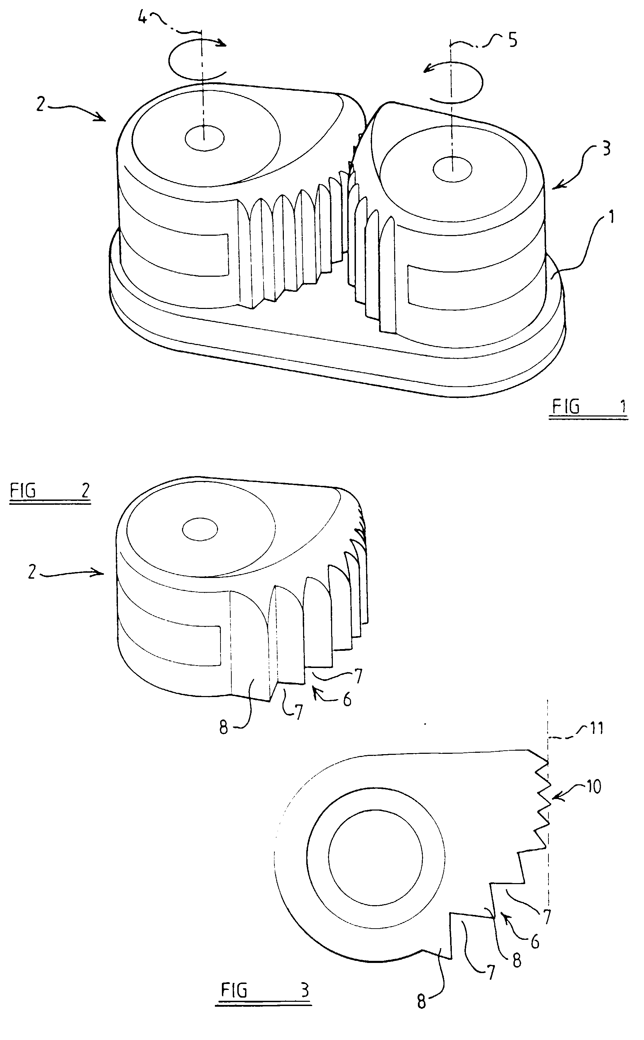

Referring initially to figure 1 a cam cleat in accordance with the present invention comprises a base 1, of generally oval form. Mounted on the base 1 are two cam elements 2, 3. The cam elements 2 and 3 are mirror-images of each other. The cam elements 2, 3 are mounted on the base for rotation about the axes identified by the dotted lines 4, 5. The cam element 2 is spring biassed to rotate in a clockwise direction about the axis 4, whereas the cam 3 is spring biassed to rotate in a counter clockwise direction about the axis 5.

Referring now to figures 2 and 3 of the accompanying drawings it can be seen, that, as is conventional, the cam 2 is provided with a region 6 which was adapted to engage a rope and which has a plurality vertically extending groves or slots 7 located between outwardly directed teeth 8.

As thus far described the cam cleat is conventional, and a large number of different versions of cam cleat of this general type have been marketed.

In a typical prior art cam cleat the teeth 8 are substantially uniform, for example, as described in GB-A-2018344. However, in contrast, the teeth 8 in the present arrangement have a relatively wide spacing and are relatively deep in an initial region 9. In the illustrated embodiment, the depth of the teeth and the spacing between the teeth gradually reduces until a terminal region 10 is reached. However, in an alternative embodiment the teeth in the initial region 9 may be uniform pitch and of uniform depth. In the terminal region 10 the teeth form a linear region aligned with the dotted line 11, whereas in the initial region 9 of the cam the teeth 8 lie on an arcuate line. In the terminal region 10, the teeth may be of progressively reducing pitch and size, or may alternatively be of uniform pitch and size.

Figures 2 and 3 only illustrate one of the two cams. However, as has been described, the two cams are effectively mirror-images of each other.

It can be appreciated that in the initial condition of the cam cleat, as shown in figure 1, the two regions 10, where the teeth 8 are relatively fine and substantially linear they effectively abut each other. If a rope of a small diameter is inserted between the cams of the cam cleat, the rope will be engaged by these relatively fine teeth. However, should a rope of a large diameter be located between the cams of the cam cleat, it will be necessary for the cams to rotate, about their axis of rotation 4, 5, by a substantial extent before there is sufficient space between the cams to accommodate the rope. Consequently it will be the relatively large teeth 8 in the region 9 of the cams that then engage the rope.

It is thus to be understood that in use of the cam cleat as illustrated, if a relatively small diameter rope is used only relatively fine teeth will engage the rope whereas if a relatively large diameter rope is used, large widely-spaced-apart teeth will engage the rope.

It is to be appreciated that if a relatively small diameter rope were engaged by widely spaced-apart deep teeth, substantial damage could be effected to the rope, since the teeth are made of hard material and typically have relatively sharp points or edges. Forces applied to a relatively narrow diameter rope by opposed relatively large sharp teeth could cause substantial damage to the rope, possibly even cutting the rope into two separate parts.

Conversely if a large diameter rope were gripped by a plurality of very fine teeth, there would be substantial risk that the rope would not be gripped but would slip. Thus, in the described camming cleat relatively fine teeth are provided on the part of the cam that will engage a narrow diameter rope, and larger teeth are provided on the part of cam that engages a larger diameter rope.

It is important that it should be relatively easy to enter the rope between the cams and to release the rope from the cams. Typically, the rope is made of a relatively hard material. It is believed that, with a rope of hard material and of small diameter, a plurality of small teeth will not deform the rope, thus providing for ease of entry and subsequent ease of release, whilst still providing a more than adequate grip on the rope. It is believed that if a hard rope of small diameter is used with larger teeth, the teeth will tend to deform the rope, thus inhibiting the ease of entry and release of the rope, and also tending to damage the rope.

Whilst, in the described preferred embodiments, the size and pitch of the teeth varies gradually over the part of the cam that is provided with teeth, it is to be appreciated that in embodiments of the invention there could be two regions of teeth, in one region the teeth being relatively uniformly spaced apart with a relatively wide pitch and being relatively deep, and in the other region the teeth being spaced apart on a relatively narrow pitch with a relatively narrow depth between teeth.

While the invention has been described with reference to a cam cleat where two mirror-image cams are provided which co-operate with each other it is to be appreciated that the present invention can apply to a cam cleat where there is one movable cam element, and a fixed surface with which the cam element co-operates to provide the camming or jamming effect.

The features disclosed in the foregoing description, in the folowing Claims and/or in the accompanying drawings may, both separately and in any combination thereof, be material for realising the invention in diverse forms thereof.

## Claims

1. A cam cleat, to engage and retain a rope, the cam cleat comprising at least one moveable cam element (2,3) having a portion (6) defining a plurality of teeth (8) adapted to engage the rope and means adapted to co-operate with said cam element (2,3) so that the cam element (2,3) can engage and retain the rope, the teeth (8) on the cam element (2,3) having at least one region (10) where the teeth (8) are relatively fine, being spaced apart on a relatively small pitch, and a further region (9) where the teeth (8) are spaced apart on a larger pitch, the teeth (8) of fine pitch being provided on part of the cam that will engage a rope of smaller diameter and the said teeth (8) that are spaced apart on a larger pitch being located on part of the cam that will engage a rope of a larger diameter, characterized in that the region of relatively fine teeth (10) comprise a row of teeth (8), which are substantially linearly arranged.

2. A cam cleat according to claim 1 wherein the means adapted to co-operate with the cam element (2) comprises another cam element (3) which is a mirror-image thereof.

3. A cam cleat according to Claim 1 or Claim 2 wherein the fine teeth are of progressively reducing pitch and size.

4. A cam cleat according to any one of the preceding claims wherein the teeth of the further region (9) are of gradually increasing depth and gradually increasing pitch with increasing distance from the teeth of relatively fine pitch.

5. A cam cleat according to any one of Claims 1 to 3 wherein the teeth of the further region (9) are of substantially uniform pitch and of substantially uniform depth.

## Patentansprüche

1. Exzenter-Seilklemme zum Erfassen und Festhalten eines Seils, wobei die Exzenter-Seilklemme zumindest ein bewegbares Exzenterelement (2, 3) aufweist, das einen Abschnitt (6), der eine Anzahl von Zähnen (8) festlegt, die dazu bestimmt sind, das Seil zu erfassen, und Mittel, die dazu bestimmt sind, mit dem Exzenterelement (2, 3) zusammenzuwirken, so daß das Exzenterelement (2, 3) das Seil erfassen und festhalten kann, besitzt, wobei die Zähne (8) auf dem Exzenterelement (2, 3) zumindest einen Bereich (10) aufweisen, in dem die Zähne (8) relativ fein sind und mit einem relativ geringen gegenseitigen Abstand angeordnet sind, und einen weiteren Bereich (9), in dem die Zähne (8) mit einem größeren gegenseitigen Abstand angeordnet sind, wobei die Zähne (8) mit geringerem gegenseitigen Abstand auf einem Abschnitt des Exzenters angeordnet sind, der ein Seil geringeren Durchmesser erfaßt, und die Zähne (8), die mit einem größeren gegenseitigen Abstand angeordnet sind, auf einem Abschnitt des Exzenters angeordnet sind, der ein Seil mit einem größeren Durchmesser erfaßt, dadurch gekennzeichnet, daß der Bereich mit relativ feinen Zähnen (10) eine Reihe von Zähnen (8) aufweist, die im wesentlichen linear angeordnet sind.

2. Exzenter-Seilklemme nach Anspruch 1, dadurch gekennzeichnet, daß die Mittel, die zum Zusammenwirken mit dem Exzenterelement (2) bestimmt sind, aus einem weiteren Exzenterelement (3) bestehen, das ein Spiegelbild davon bildet.

3. Exzenter-Seilklemme nach Anspruch 1 oder 2, dadurch gekennzeichnet, daß die feinen Zähne eine(n) allmählich abnehmende(n) gegenseitigen Abstand und Größe aufweisen.

4. Exzenter-Seilklemme nach einem der vorangehenden Ansprüche, dadurch gekennzeichnet, daß die Zähne des weiteren Bereichs (9) allmählich zunehmende Tiefe und allmählich zunehmenden gegenseitigen Abstand mit zunehmender Entfernung von den Zähnen mit relativ feinem gegenseitigem Abstand aufweisen.

5. Exzenter-Seilklemme nach einem der Ansprüche 1 bis 3, dadurch gekennzeichnet, daß die Zähne des weiteren Bereichs (9) einen im wesentlichen gleichmäßigen gegenseitigen Abstand und im wesentlichen gleichmäßige Tiefe aufweisen.

## Revendications

1. Un taquet coinceur à came, pour mettre en prise et retenir une corde, le taquet coinceur à came comprenant au moins un élément formant came (2, 3) mobile, ayant une partie (6) définissant une pluralité de dents (8) adaptées pour venir en prise avec la corde, et des moyens, adaptés pour coopérer avec ledit élément formant came (2, 3), de sorte que l'élément formant came (2, 3) puisse venir en prise avec et retenir la corde, les dents (8) sur l'élément formant came (2, 3) ayant au moins une zone (10) où les dents (8) sont relativement fines, espacées selon un pas relativement petit, et une autre zone (9) où les dents (8) sont espacées les unes des autres selon un pas plus grand, les dents (8) de pas fin étant prévues sur une partie de la came allant venir en prise avec une corde de plus petit diamètre et lesdites dents (8) espacées selon un plus grand pas étant placées sur une partie de la came allant venir en prise avec une corde d'un plus grand diamètre, caractérisé en ce que la zone à dents (10) relativement fines comprend une rangée de dents (8) agencées de façon sensiblement linéaire.

2. Un taquet coinceur à came selon la revendication 1, dans lequel les moyens adaptés pour coopérer avec l'élément formant came (2) comprennent un autre élément formant came (3), dont la forme répond à une symétrie miroir de celui-ci.

3. Un taquet coinceur à came selon la revendication 1 ou 2, dans lequel les fines dents sont de pas et de taille allant en diminuant progressivement.

4. Un taquet coinceur à came selon l'une quelconque des revendications précédentes, dans lequel les dents de l'autre zone (9) sont d'une profondeur allant en augmentant graduellement et d'un pas allant en augmentant graduellement, au fur et à mesure qu'augmente la distance par rapport aux dents de pas relativement fin.

5. Un taquet coinceur à came selon l'une quelconque des revendications 1 à 3, dans lequel les dents de l'autre zone (9) sont d'un pas sensiblement uniforme et d'une profondeur sensiblement uniforme.
